Europäisches Patentamt

European Patent Office

Office européen des brevets

(11) Publication number: **0 424 073 A1**

# EUROPEAN PATENT APPLICATION

(21) Application number: 90311277.9

(51) Int. Cl.5: **B60P 3/12**

(22) Date of filing: 16.10.90

(30) Priority: 20.10.89 GB 8923700

(43) Date of publication of application:
24.04.91 Bulletin 91/17

(84) Designated Contracting States:
AT BE CH DE DK ES FR GB GR IT LI LU NL SE

(71) Applicant: Brimec (U.K.) Limited
Chapel Lane Clay Hill
Bristol, BS5 7TL Avon(GB)

(72) Inventor: Jones, Anthony Edwin
Driud Stone, 1 Driud Stoke Avenue Stoke
Bishop
Bristol BS9 1DB(GB)

(74) Representative: Lally, William
FORRESTER & BOEHMERT
Widenmayerstrasse 4/I
W-8000 München 22(DE)

(54) Lifting mechanism for a recovery vehicle.

(57) The mechanism comprises power means comprising an hydraulic piston/cylinder device [8] secured to the underside of the vehicle which is connected to linkage mechanism [12, 20, 21, 22] of the four-bar type, one of the links of which is provided by part of a supporting device [16] on which a pair of wheels of a vehicle to be recovered may be mounted. In a first mode of movement, the linkage mechanism operates as a four-bar linkage, producing on operation of the piston/cylinder device [8] primarily tralational movement alone of the supporting device [16], as the wheels of a vehicle to be recovered are lifted primarily only vertically. However on movement of the supporting device from the second to a third, retracted position, the linkage mechanism operates as a fixed member producing primarily only pivotal movement of the supporting device [16] about a fixed pivot [A]. In this manner movement of the supporting device as will be required during a recovery operation thereof will be relatively stable vertical translational movement with a high mechanical advantage, whilst movement to the retracted position may be effected relatively speedily.

FIG 1

## LIFTING MECHANISM FOR A RECOVERY VEHICLE

This invention is concerned with improvements relating to recovery vehicles, particularly of the kind used for transporting a broken down car (herein referred to as a recovered vehicle) and specifically of the kind (hereinafter referred to as being as being of the kind specified) comprising a lifting mechanism comprising a supporting device onto which a pair of wheels of the recovered vehicle may be positioned, and means to move the supporting device from a first, inoperative position adjacent to the ground and a second, raised position in which it supports said pair of wheels above the ground.

Difficulty is encountered in that, with a support device which moves from its first to its second position about a pivot axis, relative movement necessarily occurs between the wheels of the recovered vehicle and the supporting device itself as the supporting device tilts.

Thus in accordance with one aspect of this invention there is provided lifting mechanism for a recovery vehicle of the kind specified, wherein movement of the supporting device from its first to its second position involves translation movement.

Advantageously such translational movement is effected by utilisation of a linkage mechanism comprising "parallel linkage" or the like four bar linkage with part of the supporting device affording one of the links thereof.

In this manner the lifting mechanism can be so arranged when in its first position that the supporting device adopts an essentially horizontal position, allowing the wheels of a vehicle to be recovered easily to be rolled thereon, movement of the supporting device to its second position retaining the supporting device in an essentially horizontal disposition.

However conveniently movement of the supporting device from its first to its second position may involve some, although preferably minor, pivotal movement.

Additionally it is in general desirable in a recovery vehicle of the kind specified, that means is provided to move the supporting device to a third, retracted position in which it presents a minimum degree of obstruction when not in use. Where movement of the supporting device from its first to its second position involves pivotal movement about a fixed axis, conveniently movement to said third position involves further movement about said axis so that the supporting device adopts a substantially vertical position. This is particularly convenient since it allows a pulley to be mounted on the supporting device and held by the supporting device in a high position, allowing for convenient pulling operations.

However difficulty is encountered in providing such a lifting mechanism. For example, movement from the first to the second position is desirably slow with a high mechanical advantage, whilst movement from the second to the third position does not require a high mechanical advantage, and may conveniently be executed speedily.

Thus according to this invention there is also provided lifting mechanism for a recovery vehicle of the kind specified comprising power means operative to move the supporting device from its first to its second position in a first mode, and to move the supporting device from its second to its third position in a second mode.

Thus, the first mode of movement may be one which provides a high mechanical advantage, and/or is effective to maintain the supporting device in a desirable, stable orientation, whilst the second mode may be one which may be effected relatively speedily.

Thus advantageously movement in the first mode may involve movement about a parallel linkage, in which the supporting device undergoes primarily translational movement from the first to the second position, whilst movement in the second mode may conveniently involve primarily movement about a pivot.

Preferably movement of the supporting device in both modes is effected by a single power member, such as a piston/cylinder device.

There will now be given a detailed description, to be read with reference to the accompanying drawings, of a lifting mechanism for a recovery vehicle which has been selected for the purposes of illustrating the invention by way of example.

In the accompanying drawings:

**FIGURE 1** is a schematic view of the lifting mechanism showing a supporting device thereof in a first position, power means thereof being in a first mode;

**FIGURE 2** is a view of the lifting mechanism showing the supporting device in a second position, the power means being in a second mode; and

**FIGURE 3** is a view of the lifting mechanism showing the supporting device in a third position.

The lifting mechanism which is the preferred embodiment of this invention comprises power means comprising an hydraulic piston/cylinder device 8 secured to the underside of the vehicle, spaced a short distance forwardly of a downwardly-extending frame member 10 of the vehicle, to which member 10 an **L**-shaped link 12 is mounted by a pivot **A**, a rod 14 of the device 8 being pivotally connected to one end of the link 12 by a pivot **E**.

The supporting device comprises a support member 16, comprising a boom 18 to one end of which, not shown, a pair of "spectacles" lifting frames is secured, of the kind onto which a pair of wheels (i.e. either the front or rear wheels) of a vehicle to be recovered may be driven or rolled. The boom 18 is provided with a support bracket 20, to an upper point of which the lever 12 is connected by a pivot **B**.

Also carried by the frame member 10, connected at the pivot **A**, is a generally triangular-shaped pivot member 21. A link 22 is pivotally connected at one end to the bracket 20, by a pivot **C**, whilst the opposite end of the link 22 is connected to the plate 20 by a pivot **D**.

It will thus be appreciated that the supporting device 16 is mounted on the frame of the recovery vehicle by what is essentially a parallel linkage mechanism, the links 12 and 22 providing one pair of parallel links, whilst the plates 20 and 21 provided the opposite pair of links, the linkage mechanism constituting part of the power means of the lifting mechanism operative between the piston/cylinder device 8 and the supporting device.

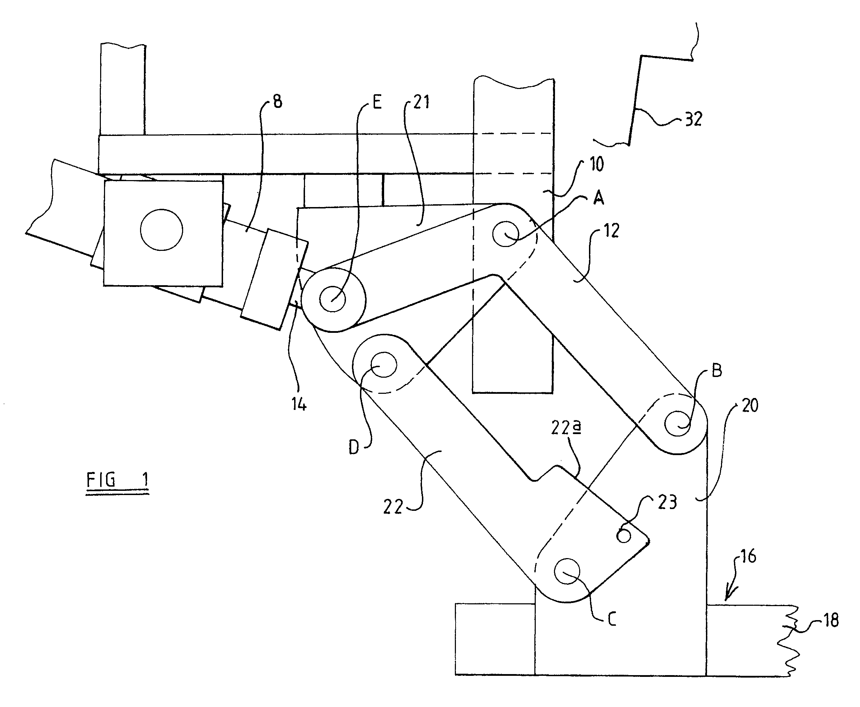

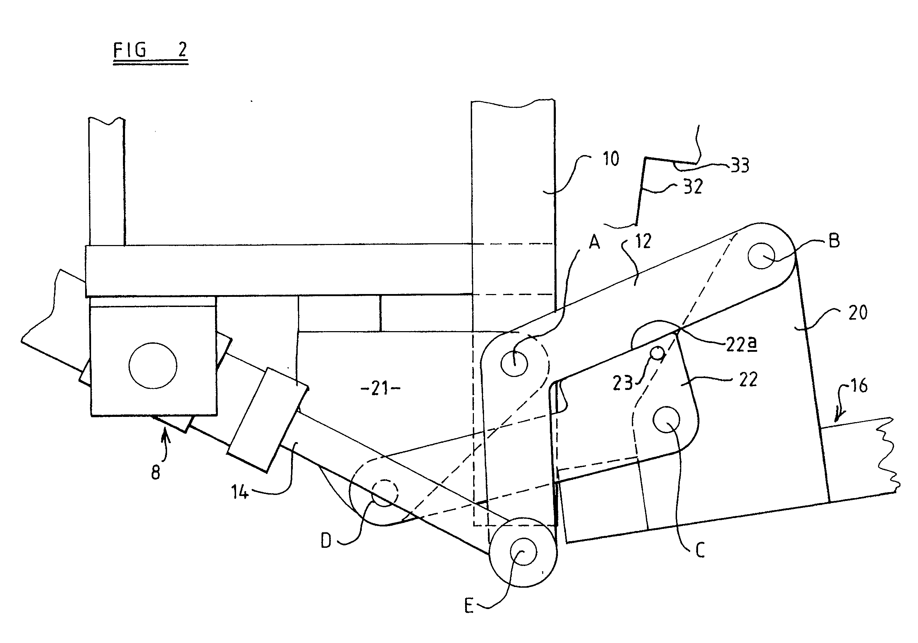

In the operation of the lifting mechanism, the piston 14 of the device 8 is out stroked, rotating the lever 12 about the pivot **A**, and with it the four bar linkage mechanism 12, 20, 22, 21 as a whole. Thus, movement of the supporting device from its first position, shown in Figure 1, to its second position, shown in Figure 2, involves primarily translational movement, albeit with a small degree of pivotal movement about the axis **A**, preferably in an "inward" direction as shown. However in practice the degree of pivotal movement compared with the amount of vertical translational movement is small, allowing the wheels of the vehicle being recovered to be retained securely on the spectacle frame of the supporting device 16.

During movement of the four bar linkage from the first to the second position of the supporting device, the power means operates in a first mode with the linkage mechanism open. The links 12 and 22 move towards one another, movement of the supporting device being relatively slow with high mechanical advantage, until in the second position a shoulder 22a of the link 22 engages the underside of the link 12. In this position the four bar link commences to operate as a solid linkage, and further outstroking of the piston rod 14 causes the linkage as a whole to rotate about pivot **A**, including the plate 21. Thus in this second mode of the power means movement of the supporting device is primarily pivotal movement about the axis **A** and the supporting device is quickly raised to its vertical position, albeit with low mechanism advantage.

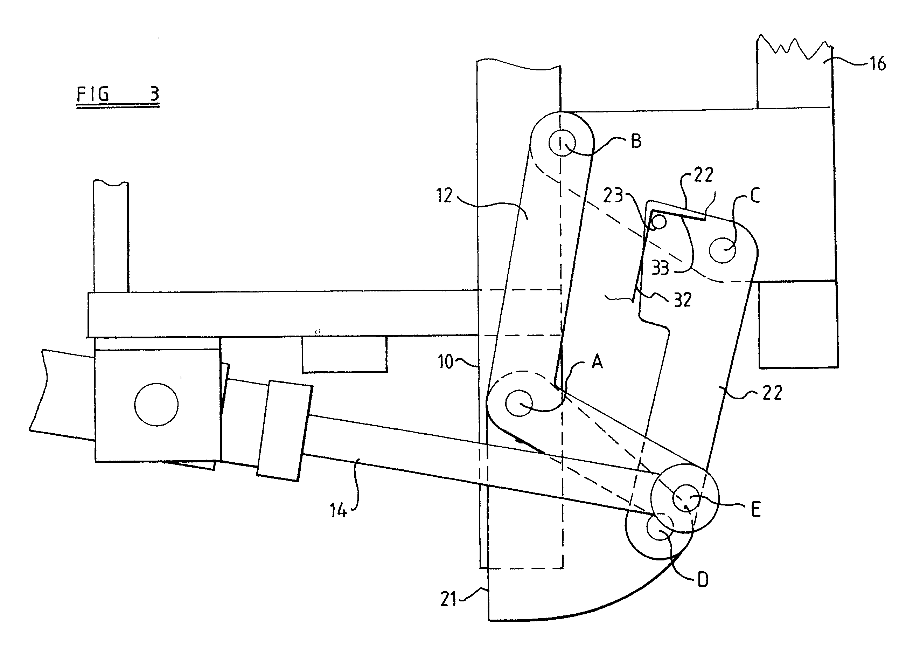

Towards the end of the movement of the supporting device in the second mode, a peg or roller 23 carried by the link 22 engages a fixed trackway 32, along which the peg 23 slips or rolls, causing the four bar link to open out, to the final position shown in Figure 3. This allows the final position of the linkage to be determined relatively easily, particularly by the provision of an end face 33 against which, in said final position, the peg engages.

By the use of the mechanism above described, the operation of lifting the wheels of a recovered vehicle is carried out with the power means in its first mode, involving primarily translational movement of the supporting device from its first to its second position under high mechanical advantage. Conversely movement of the supporting device into its third position is carried out with the power means in its second mode, allowing speedy movement of the supporting device, which is primarily pivotal movement about the axis **A**, from its second to its third position to be obtained.

The features disclosed in the foregoing description, or the following claims, or the accompanying drawings, expressed in their specific forms or in the terms of a means for performing the disclosed function, or a method or process for attaining the disclosed result, or a class or group of substances or compositions, as appropriate, may, separately or in any combination of such features, be utilised for realising the invention in diverse forms thereof.

## Claims

1. Lifting mechanism for a recovery vehicle, said lifting mechanism comprising a supporting device [16] onto which a pair of wheels of a recovered vehicle may be positioned, and power means [8] to move the supporting device from a first, inoperative position adjacent to the ground to a second, raised position in which it supports said wheels above the ground, characterised in that movement of the supporting device [20] from its first to its second position involves translation movement.

2. Lifting mechanism according to Claim 1 comprising linkage mechanism [12,20,21,22] for effecting movement of the supporting device [16].

3. Lifting mechanism according to Claim 2 wherein the supporting device is mounted for movement from the second to a third, retracted position, movement from said second to said third position involving primarily movement of the supporting device [16] about a pivot [A].

4. Lifting mechanism according to Claim 3 wherein said linkage mechanism adopts a first mode on movement of the supporting device from its first to its second position in which it operates as a four-bar linkage mechanism [12, 21, 22] producing primarily translational movement of the supporting device, and a second mode on movement of the supporting device from its second to its third position in which the linkage mechanism operates primarily as a solid member.

5. Lifting mechanism according to any one of Claims 2 to 4 wherein the supporting device constitutes one of the links [20] of the linkage mechanism [12,20,21,22].

6. Linkage mechanism according to any one of the preceding claims comprising a fluid operated distant/cylinder device [8] to move the supporting device between said positions.

7. Lifting mechanism according to Claim 6 wherein said device [8] is connected to one [12] of the links of the linkage mechanism [12,20,21,22].

8. Lifting mechanism for a recovery vehicle, said lifting mechanism comprising a supporting device [16] onto which a pair of wheels of a recovered vehicle may be positioned, and power means [8] to move the supporting device from a first, inoperative position adjacent to the ground, a second, raised position in which it supports said pair of wheels above the ground, and a third, retracted position, characterised in that the power means [8,14,12,20,21,22] is operative to move the supporting device [16] from its first to its second position a first mode, and to move the supporting device from its second to its third position in a second mode.

9. Lifting mechanism according to Claim 8 wherein movement in the first mode involves movement about a parallel linkage [12,20,21,22], whilst movement in the second mode involves movement about a pivot [A].

10. Lifting mechanism according to one of Claims 8 and 9 wherein movement of the supporting device [16] in both modes is effected by a single power member, such as a position/cylinder device [8, 14].

FIG 1

FIG 2

FIG _3_

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | GB-A-1 407 262 (RATCLIFF) <br> * page 2, lines 57 - 60; figures 1-3 * <br> — — — | 1,6,2,3,8, 10 | B 60 P <br> 3/12 |
| Y,A | DE-A-2 758 852 (RATCLIFF) <br> * figures 1-3 * <br> — — — | 2,3,4,6,7 | |
| Y | US-A-2 979 214 (SELZER) <br> * figures 1, 3, 4 * <br> — — — | 8,10 | |
| A | EP-A-0 006 225 (VEREINIGTE METALLWERKE) <br> — — — | | |
| A | DE-U-7 131 345 (WEYHAUSEN & CO) <br> — — — — — | | |

**TECHNICAL FIELDS SEARCHED (Int. Cl.5)**

B 60 P

The present search report has been drawn up for all claims

| Place of search | Date of completion of search | Examiner |
|---|---|---|
| Berlin | 24 January 91 | LUDWIG H J |